(19) Europäisches Patentamt
European Patent Office
Office européen des brevets

(11) EP 4 645 268 A1

(12) EUROPEAN PATENT APPLICATION
published in accordance with Art. 153(4) EPC

(43) Date of publication:
05.11.2025  Bulletin 2025/45

(51) International Patent Classification (IPC):
G06V 40/10 (2022.01)

(21) Application number: 23910115.7

(22) Date of filing: 12.12.2023

(52) Cooperative Patent Classification (CPC):
Y02P 90/30

(86) International application number:
PCT/CN2023/138260

(87) International publication number:
WO 2024/140185 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2022  CN 202211707970

(71) Applicant: Shanghai Meinaier Technology Co.,
Ltd.
Shanghai 201800 (CN)

(72) Inventors:
• XIANG, Yong
Shanghai 200082 (CN)
• YAN, Jin
Shanghai 200082 (CN)

(74) Representative: Herrero & Asociados, S.L.
Cedaceros, 1
28014 Madrid (ES)

(54) **METHOD AND SYSTEM FOR IDENTIFYING AND POSITIONING NAILS**

(57) A method and system for nail recognition and positioning are disclosed. The method includes: S1, acquiring, by a recognition device, first image information of an operating area through photographing, sending the first image information to a target-detecting network to generate corresponding second image information, and comparing to obtain nail mask images after performing segmentation; S2, obtaining true coordinates of a nail point cloud through calculation of an original 3D point cloud and the nail mask images; S3, converting the nail point cloud to a calibration coordinate system, which is determined by locating a printing device below the identification device; S4, traversing each nail to obtain angle information of the nails according to point cloud information of the nails; and S5, projecting point cloud coordinates of each nail to a two-dimensional plane according to external parameters of a camera, and obtaining a deflection angle of each nail. The device performs a calculation on nail mask images and an original 3D point cloud, so as to obtain the real point cloud coordinates of each nail, such that shapes of the nails can be reflected by a plurality of point cloud coordinates.

S1: acquiring, by a recognition device, first image information of an operating area through photographing, positioning locations of nails in the first image information through a target-detecting network to generate corresponding second image information, transmitting the second image information to a segmentation network to divide the second image information into a plurality of regions, and comparing the first image information with the divided second image information after pre-setting a probability value, to obtain nail mask images of the first image information → s1

S2: obtaining true coordinates of a nail point cloud through calculation of an original 3D point cloud and the nail mask images, and performing statistical filtering on the nail point cloud to eliminate noise points of the point cloud → s2

S3: converting the nail point cloud to a calibration coordinate system, which is determined by locating a printing device below the recognition device → s3

S4: traversing each nail to obtain information comprising a highest point, left/right tilt angles, and front/back tilt angles of the nails according to point cloud information of the nails → s4

S5: projecting point cloud coordinates of the nails to a two-dimensional plane according to external parameters of a camera, performing Gaussian filtering to eliminate potential noise points, and obtaining a deflection angle of each nail according to a two-dimensional image → s5

FIG. 1

EP 4 645 268 A1

**Description**

TECHNICAL FIELD

The present invention relates to the field of intelligent nail decorating, and more specifically, to a method and system for nail recognition and positioning.

BACKGROUND

Currently, most intelligent nail decorating machines only perform printing on a single nail surface. Before preparing for nail decorating, the nail decorating machine first needs to pre-coat the nail surface with nail gel, where the color of the nail gel is different from the surrounding environment of the handrest and the color of the finger, and then recognize the contour of the nail, which severely restricts the nail decorating time and recognition accuracy. Moreover, since only a single nail is printed, there is no need to recognize the rotation angle and tilt of the nail surface.

At present, a solution is adopted where the four fingers (the four fingers refer to the index finger, middle finger, ring finger, and little finger) and the thumb are arranged on different planes, that is, according to the structure of the human hand, the left thumb is arranged on the right side of the handboard, perpendicular to the plane where the four fingers are located, and the right thumb is arranged on the left side of the handboard, perpendicular to the plane where the four fingers are located. In this solution, after the fingers are placed in the operating area, the nail surface will rotate and tilt. In addition, the existing technology recognizes a single nail, and the nail surface needs to be pre-coated with nail gel, the color of which is different from the surrounding environment of the handrest and the color of the finger, usually white, and then recognition is performed. The steps are cumbersome, increasing the nail decorating time.

It should be noted that the applicant has previously applied for a patent with the publication number CN113469093A, which is a nail recognition method and system based on deep learning. By pre-acquiring the original hand image, obtaining the probability value of each pixel in the original hand image belonging to the nail section, and obtaining the nail mask image of the original hand image, extracting the contour coordinates of the nail in the nail mask image and obtaining the deflection angle and tilt information of each nail, it is realized that there is no need to pre-coat the nail surface with nail gel and anti-overflow gel before nail recognition, and multiple nails can be recognized at the same time, with higher recognition accuracy and less overall time required, which can solve the problems in the above technologies. However, the obtained nail mask image is a two-dimensional image, and the position and area of the nail are reflected by the two-dimensional mask image. The problem with this patent is that the nail is an arc surface, each finger is not with the nail surface facing upward, and there is a certain tilt angle. The rotation information is included in the depth (Z-axis), and the two-dimensional image cannot process it. At the same time, the height of each finger nail is completely different, and the two-dimensional information has no Z-axis data and cannot judge the height. The lack of Z-axis data will cause serious errors in the spraying process, affecting the nail decorating effect.

The slope of the nail on the X and Y axes is called the rotation angle; the slope of the nail on the Z axis is called the tilt angle.

SUMMARY

The object of the present invention is to propose a method and system for nail recognition and positioning in view of the problem that errors occur due to the tilt angle and height difference of the nails in the process of identifying the nails for spraying in the existing nail decorating machine products.

In order to achieve the above object, the present invention adopts the following technical solution, a method for nail recognition and positioning includes:

S1: acquiring, by a recognition device, first image information of an operating area through photographing, positioning locations of nails in the first image information through a target-detecting network to generate corresponding second image information, transmitting the second image information to a segmentation network to divide the second image information into a plurality of regions, and comparing the first image information with the divided second image information after pre-setting a probability value, to obtain nail mask images of the first image information;

S2: obtaining true coordinates of a nail point cloud through calculation of an original 3D point cloud and the nail mask images, and performing statistical filtering on the nail point cloud to eliminate noise points of the point cloud;

S3: converting the nail point cloud to a calibration coordinate system, which is determined by locating a printing device below the recognition device;

S4: traversing each nail to obtain information including a highest point, left/right tilt angles, and front/back tilt angles of the nails according to point cloud information of the nails;

S5: projecting point cloud coordinates of the nails to a two-dimensional plane according to external parameters of a camera, performing Gaussian filtering to eliminate potential noise points, and obtaining a deflection angle of each nail according to a two-dimensional image.

As a further description of the above technical solution, the step S1 further includes:

S11: acquiring, by the recognition device, the first image information through photographing positions of fingers in the operating area, and sending the first image information to the target-detecting network to position nail sections in the first image information so as to generate the corresponding second image information mainly comprising image information of the nail sections;

S12: sending the second image information to the segmentation network, pre-setting a probability value of judgment, obtaining a probability value that each pixel in an original hand image belongs to a nail section, marking pixel points with a probability value greater than the preset probability value as the nail section, marking pixel points with a probability value less than the preset probability value as a non-nail section, so as to obtain the nail mask images of the first image information.

As a further description of the above technical solution, the step S2 further includes:

S21: calculating the nail mask images and original 3D point cloud data to obtain true point cloud coordinates of the nails, where the original 3D point cloud data are data set in a real world;

S22: performing filtering on each nail mask image to eliminate noise points of the point cloud, such that an accuracy of image information is fed back through the point cloud.

As a further description of the above technical solution, the step S3 further includes:

S31: setting, based on the recognition device, an initial position of the printing device below the recognition device as the calibration coordinate system;

S32: sending a true point cloud of the nails to the calibration coordinate system, which is obtained by combining the calibration coordinate system with the true point cloud;

As a further description of the above technical solution, the step S4 further includes:

S41: traversing, according to a point cloud of each nail, the nails, and obtaining basic data of the nails by combining point cloud data;

S42: performing, after traversing the nails according to the point cloud data, data sorting for the point cloud of the nails to obtain the highest point, the left/right tilt angles and the front/back tilt angles of the nail point cloud.

As a further description of the above technical solution, the step S5 further includes:

S51: projecting point cloud coordinates of the nails to the two-dimensional plane according to external parameters of the camera, performing Gaussian filtering to eliminate potential noise points, and obtaining the deflection angle of each nail according to the two-dimensional image;

S52: pre-extracting a nail mask image of each nail individually, extracting an image contour of each nail mask through an image processing function library, and performing minimum rectangle fitting to return a rotation angle taking an upper left vertex of a minimum rectangle as an origin after the fitting is completed;

S53: obtaining, through an image processing function, the minimum rectangle of a contour of a nail, obtaining left/right and up/down end points of the nail according to an intersection of the rectangle and the contour of the nail, calculating a left/right tilt angle of the nail according to point cloud coordinates $(x, y, z)$ of the left/right end points, and calculating an up/down tilt angle according to point cloud coordinates of the up/down end points.

As a further description of the above technical solution, the segmentation network includes but is not limited to Unet, pspnet, deeplab series, etc. for performing segmentation and comparison on the second image information.

As a further description of the above technical solution, the recognition device is one of a 3D camera, an RGB binocular camera, a 2D/3D laser radar, a 3D structured light camera, or a tof camera.

The present invention also includes a system for nail recognition and positioning, which is applicable for the method in any one of the above technical solutions, and includes:

an image processing module, configured to receive the first image information sent by the recognition device and generate the second image information according to nail sections corresponding to the first image information.

a communication module, configured to send the second image information to the segmentation network through the communication module to perform segmentation on an image of nail sections therein, and return divided nail mask images to the image processing module.

a control module, configured to preset a probability value, to compare the divided second image information with the first image information, to determine a probability value that a corresponding pixel belongs to a nail section, to mark pixel points with a probability value greater than the preset probability value as the nail section, and to mark pixel points with a probability value less than the preset probability value as the non-nail section, so as to obtain the nail mask images of the first image information.

a 3D point cloud calculation module, configured to combine the nail mask images with the original 3D point cloud to obtain true point cloud coordinates of the nails, and convert the nail point cloud to the calibration coordinate system, so that the printing device performs printing according to a location of the calibration coordinate system.

an information processing module, configured to collect and process calculated or converted 3D point cloud coordinates and to obtain a deflection angle according to the 3D point cloud coordinates.

As a further description of the above technical solution, the calibration coordinate system represents an x-y plane, parallel to a plane of the printing device.

The above technical solution has the following advantages or beneficial effects:

1. By segmenting the image information of the nail and comparing it with the first image information, a nail mask image is obtained, and the nail mask image is operated with the original 3D point cloud to obtain the true point cloud coordinates of each nail, so that the shape of the nail can be reflected by a plurality of point cloud coordinates.

2. After obtaining the true point cloud of the nail, the point cloud is converted to the calibration coordinate system, so that the point cloud coordinates are converted into the coordinate system applicable for the printing device, which can reduce errors in the printing process and make the printed pattern more accurate.

3. The position of the nail can be calibrated through the nail point cloud, and the rotation and tilt angles of the nail can be calculated through the point cloud of the upper and lower end points or the left and right end points, so that the nail can be adjusted before printing.

BRIEF DESCRIPTION OF THE DRAWINGS

Fig. 1 is a flow chart of a method for nail recognition and positioning provided by the present invention.

Fig. 2 is a flow chart of a method for nail recognition and positioning provided by the present invention.

Fig. 3 is a flow chart of a method for nail recognition and positioning provided by the present invention.

Fig. 4 is a flow chart of a method for nail recognition and positioning provided by the present invention.

Fig. 5 is a flow chart of a method for nail recognition and positioning provided by the present invention.

Fig. 6 is a flow chart of a method for nail recognition and positioning provided by the present invention.

Fig. 7 is a schematic structural diagram of a system for nail recognition and positioning provided by the present invention.

Reference numeral:

1. Image processing module; 2. Communication module; 3. Control module; 4. 3D point cloud calculation module; 5. Information processing module.

DETAILED DESCRIPTION

The technical solutions in the embodiments of the present invention will be clearly and completely described below in conjunction with the accompanying drawings in the embodiments of the present invention. Obviously, the described embodiments are only a part of the embodiments of the present invention, rather than all the embodiments. All other embodiments obtained by those of ordinary skill in the art based on the embodiments of the present invention without creative efforts shall fall within the protection scope of the present invention.

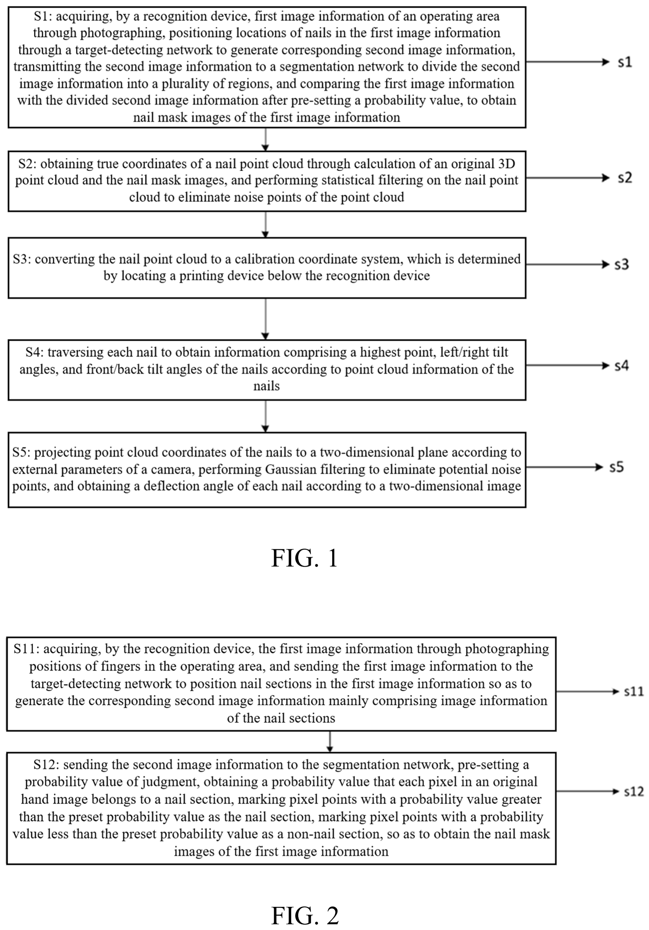

With reference to Fig. 1, an embodiment provided by the present invention: A method for nail recognition and positioning includes:

S1: acquiring, by a recognition device, first image information of an operating area through photographing, positioning locations of nails in the first image information through a target-detecting network to generate corresponding second image information, transmitting the second image information to a segmentation network to divide the second image information into a plurality of regions, and comparing the first image information with the divided second image information after pre-setting a probability value, to obtain nail mask images of the first image information;

S2: obtaining true coordinates of a nail point cloud through calculation of an original 3D point cloud and the nail mask images, and performing statistical filtering on the nail point cloud to eliminate noise points of the point cloud;

S3: converting the nail point cloud to a calibration coordinate system, which is determined by locating a printing device below the recognition device ;

S4: traversing each nail to obtain information including a highest point, left/right tilt angles, and front/back tilt angles of the nails according to point cloud information of the nails;

S5: projecting point cloud coordinates of the nails to a two-dimensional plane according to external parameters of a camera, performing Gaussian filtering to eliminate potential noise points, and obtaining a deflection angle of each nail according to a two-dimensional image.

In this embodiment, the recognition device acquiresa photo to recognize the fingers placed in the operating area, generates first image information, which is the original image of the fingers, positions the nails in the generated first image information, generates second image information based on an image of nail sections, and sends it to the segmentation network. After dividing the second image information into several regions, it is compared with the first image information to obtain a nail mask image. The nail mask image is operated with the original 3D point cloud data to obtain the true point cloud coordinates of the nails, and the noise is eliminated. The point cloud is converted to the calibration coordinate system to determine the position of the coordinate system. Each nail is traversed, each point cloud coordinate is collected to obtain point cloud coordinate information, and then the highest point of the nail, the left/right tilt angle, the front/back tilt angle and other information are judged. The point cloud coordinates of the nail are projected onto a two-dimensional plane according to external parameters of the camera, and the corresponding reference system coordinates are calculated through the external parameters. Gaussian filtering is performed to eliminate possible noise points, so that the reference system position is more accurate.

The point cloud can automatically measure the information of a large number of points on the surface of an object and then output the point cloud data in a data file. These point cloud data are collected by the scanning device, and the point cloud can also be created by using the scanned image and the internal parameters of the scanning camera. The method is to calculate the real-world points (x, y, z) through camera calibration and the internal parameters of the camera. The relationship between the 3D points in the world coordinate system and the points (u, v) in the image needs to be assisted by the camera coordinate system and the image coordinate system. The transformation from the world coordinate system to the camera coordinate system (external parameters) is as follows:

$$PC = [XC*YC*ZC] = [R|T]PW = [R|T][XW*YW*ZW*1]$$

The corresponding 3D points can be obtained, where [R|T] is the external parameter of the camera.

From the camera coordinate system to the points in the image (internal parameters), this process is to map the three-dimensional point $PC = [XC, YC, ZC]^\tau$ in the camera coordinate system to the two-dimensional point $p = (x, y)$ in the image plane coordinate system through matrix transformation. The relationship between the three-dimensional coordinate points and the two-dimensional coordinate points in the image coordinate system is mapped to facilitate more accurate calculation of the position.

With reference to Fig. 2, the step S1 further includes:

S11: acquiring, by the recognition device, the first image information through photographing positions of fingers in the operating area, and sending the first image information to the target-detecting network to position nail sections in the first image information so as to generate the corresponding second image information mainly comprising image information of the nail sections;

S12: sending the second image information to the segmentation network, pre-setting a probability value of judgment, obtaining a probability value that each pixel in an original hand image belongs to a nail section, marking pixel points with a probability value greater than the preset probability value as the nail section, marking pixel points with a probability value less than the preset probability value as a non-nail section, so as to obtain the nail mask images of the first image information.

In this embodiment, the recognition device can be a 3D camera, and the segmentation network includes but is not limited to Unet, pspnet, deeplab series, etc., to perform segmentation and comparison on the second image information to obtain the probability value of each pixel in the original image belonging to the nail section, with a range of 0-1. The deep learning segmentation method avoids complex feature processing and has good detection accuracy and boundary accuracy. Assuming that the preset probability value is 0.5, when comparing, the pixel points greater than the preset probability value are marked as the nail section, and the pixel points less than the preset probability value are marked as the non-nail section. The areas marked by several pixel points are spliced to form a nail mask image.

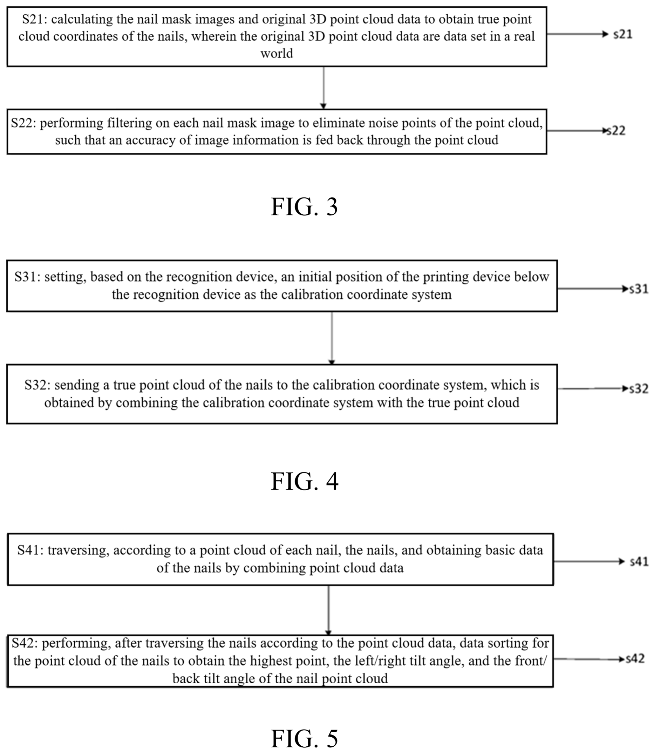

With reference to Fig. 3, the step S2 further includes:

S21: calculating the nail mask images and original 3D point cloud data to obtain true point cloud coordinates of the nails, where the original 3D point cloud data are data set in a real world;

S22: performing filtering on each nail mask image to eliminate noise points of the point cloud, such that an accuracy of image information is fed back through the point cloud.

In this embodiment, the nail mask image is operated with the 3D point cloud data to obtain the true point cloud coordinates of the nail, and the nail mask image can be subjected to median filtering to obtain a new nail mask image.

With reference to Fig. 4, the step S3 further includes:

S31: setting, based on the recognition device, an initial position of the printing device below the recognition device as the calibration coordinate system ;

S32: sending a true point cloud of the nails to the calibration coordinate system, which is obtained by combining the calibration coordinate system with the true point cloud .

In this embodiment, the printing device is an inkjet head, and the calibration coordinate system represents an x-y plane parallel to the plane of the printer. The relative position of the printing device below is determined by the position of the recognition device, and the initial position of the printing device is set as the calibration coordinate system.

With reference to Fig. 5, the step S4 further includes:

S41: traversing, according to a point cloud of each nail, the nails, and obtaining basic data of the nails by combining point cloud data ;

S42: performing, after traversing the nails according to the point cloud data, data sorting for the point cloud of the nails to obtain the highest point, the left/right tilt angles and the front/back tilt angles of the nail point cloud.

In this embodiment, by traversing the point cloud coordinates of the nails, collecting them through three algorithms of pre-order, in-order, or post-order, taking the identified several coordinates as a set, and analyzing the data in the set, the highest point of the nail point cloud and the lowest points around it can be obtained, and the left/right tilt angle and front/back tilt angle can be calculated through the corresponding coordinate system, which has high accuracy.

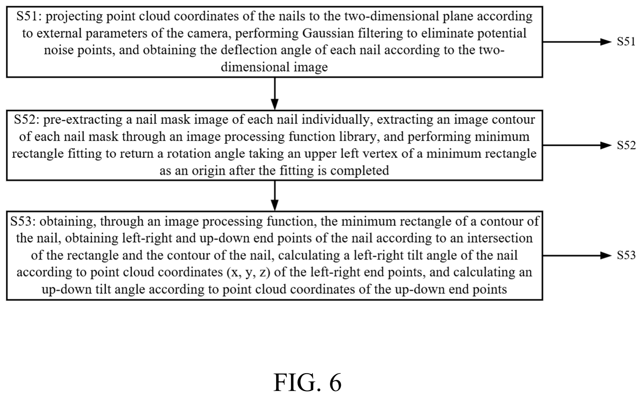

With reference to Fig. 6, the step S5 further includes:

S51: projecting point cloud coordinates of the nails to the two-dimensional plane according to external parameters of the camera, performing Gaussian filtering to eliminate potential noise points, and obtaining the deflection angle of each nail according to the two-dimensional image;

S52: pre-extracting a nail mask image of each nail individually, extracting an image contour of each nail mask through an image processing function library, and performing minimum rectangle fitting to return a rotation angle taking an upper left vertex of a minimum rectangle as an origin after the fitting is completed;

S53: obtaining, through an image processing function, the minimum rectangle of a contour of a nail, obtaining left/right and up/down end points of the nail according to an intersection of the rectangle and the contour of the nail, calculating a left/right tilt angle of the nail according to point cloud coordinates (x, y, z) of the left/right end points, and calculating an up/down tilt angle according to point cloud coordinates of the up/down end points.

In this embodiment, after obtaining the deflection angle of each nail, the nail mask image of each nail is individually extracted, and the length and width of the external rectangle of the contour of the nail are enlarged to an appropriate multiple (in this embodiment, it can be enlarged by 2 times) as the length and width of the extracted image, which is convenient for subsequent contour extraction. The contour of each nail image can be extracted by using the Opencv image processing function library, such as findcounter, and the minimum rectangle fitting is used to return the rotation angle of the minimum rectangle with the upper left vertex as the origin. This rotation angle is set as the rotation angle of the nail. The tilt direction and angle of the nail are judged according to the intersection of the rectangle and the contour of the nail.

Specifically, the recognition device is one of a 3D camera, an RGB binocular camera, a 2D/3D laser radar, a 3D structured light camera, or a tof camera.

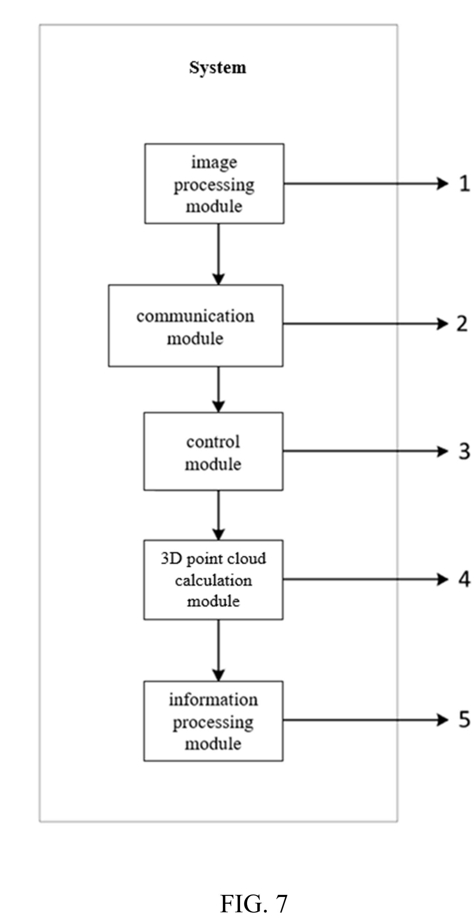

With reference to Fig. 7, an embodiment of a system for nail recognition and positioning is further included in the technical solution of the present invention. The system is applicable for the method in any one of the above technical solutions, and includes:

an image processing module 1, configured to receive the first image information sent by the recognition device and generate the second image information according to nail sections corresponding to the first image information;

a communication module 2, configured to send the second image information to the segmentation network through the communication module to perform segmentation on an image of nail sections therein, and return divided nail mask images to the image processing module;

a control module 3, configured to preset a probability value, to compare the divided second image information with the first image information, to determine a probability value that a corresponding pixel belongs to a nail section, to mark pixel points with a probability value greater than the preset probability value as the nail section, and to mark pixel points with a probability value less than the preset probability value as the non-nail section so as to obtain the nail mask images of the first image information;

a 3D point cloud calculation module 4, configured to combine the nail mask images with the original 3D point cloud to obtain true point cloud coordinates of the nails, and convert the nail point cloud to the calibration coordinate system, so that the printing device performs printing according to a location of the calibration coordinate system;

an information processing module 5, configured to collect and process the calculated or converted 3D point cloud coordinates and to obtain a deflection angle according to the 3D point cloud coordinates.

Further, the calibration coordinate system represents an x-y plane, parallel to a plane of the printing device.

In this embodiment, the image processing module 1 receives the first image information sent by the recognition device, positions the nails in the generated first image information, generates second image information based on an image of nail sections, and sends the first image information to the target-detecting network and the second image information to the segmentation network through the communication module 2 to realize the transmission of image information. The control module 3 is configured to preset a probability value, to compare the divided second image information with the first image information, to mark the pixel points with a probability value greater than the preset probability value as the nail section, and to mark the pixel points with a probability value less than the preset probability value as the non-nail section, so as to obtain the nail mask image of the first image information. The 3D point cloud calculation module 4 can automatically measure the information of a large number of points on the surface of an object by using point clouds, and then output the point cloud data in a data file. The relationship between the three-dimensional coordinate points and the two-dimensional coordinate points in the image coordinate system is mapped, which is convenient for more accurate calculation of the position. The information processing module 5 collects and processes the calculated or converted 3D point cloud coordinates, obtains the deflection angle according to the 3D point cloud coordinates, traverses the point cloud coordinates of the nails, collects them through three algorithms of pre-order, in-order, or post-order, takes the identified several coordinates as a set, and analyzes the data in the set to obtain the highest point of the nail point cloud and the lowest points around it, and calculates the left/right tilt angle and front/back tilt angle through the corresponding coordinate system, which has high accuracy.

Finally, it should be noted that the above are only preferred embodiments of the present invention and are not intended to limit the present invention. Although the present invention has been described in detail with reference to the foregoing embodiments, for those skilled in the art, it is still possible to modify the technical solutions described in the foregoing embodiments, or perform equivalent replacements for some of the technical features. Any modification, equivalent replacement, improvement, etc. made within the spirit and principle of the present invention shall be included in the protection scope of the present invention.

**Claims**

1. A method for nail recognition and positioning, **characterized by** comprising:

    S1: acquiring, by a recognition device, first image information of an operating area through photographing, positioning locations of nails in the first image information through a target-detecting network to generate corresponding second image information, transmitting the second image information to a segmentation network to divide the second image information into a plurality of regions, and comparing the first image information with the divided second image information after pre-setting a probability value, to obtain nail mask images of the first image information;
    S2: obtaining true coordinates of a nail point cloud through calculation of an original 3D point cloud and the nail mask images, and performing statistical filtering on the nail point cloud to eliminate noise points of the point cloud;
    S3: converting the nail point cloud to a calibration coordinate system, which is determined by locating a printing device below the recognition device;
    S4: traversing each nail to obtain information comprising a highest point, left/right tilt angles, and front/back tilt angles of the nails according to point cloud information of the nails;
    S5: projecting point cloud coordinates of the nails to a two-dimensional plane according to external parameters of a camera, performing Gaussian filtering to eliminate potential noise points, and obtaining a deflection angle of each nail according to a two-dimensional image.

2. The method for nail recognition and positioning according to claim 1, **characterized in that** the step S1 further comprises:

    S11: acquiring, by the recognition device, the first image information through photographing positions of fingers in the operating area, and sending the first image information to the target-detecting network to position nail sections in the first image information so as to generate the corresponding second image information mainly comprising image information of the nail sections;
    S12: sending the second image information to the segmentation network, pre-setting a probability value of judgment, obtaining a probability value that each pixel in an original hand image belongs to a nail section, marking pixel points with a probability value greater than the preset probability value as the nail section, marking pixel points with a probability value less than the preset probability value as a non-nail section, so as to obtain the nail mask images of the first image information.

3. The method for nail recognition and positioning according to claim 1, **characterized in that** the step S2 further comprises:

    S21: calculating the nail mask images and original 3D point cloud data to obtain true point cloud coordinates of the nails, wherein the original 3D point cloud data are data set in a real world; and

S22: performing filtering on each nail mask image to eliminate noise points of the point cloud, such that an accuracy of image information is fed back through the point cloud.

4. The method for nail recognition and positioning according to claim 1, **characterized in that** the step S3 further comprises:

S31: setting, based on the recognition device, an initial position of the printing device below the recognition device as the calibration coordinate system;
S32: sending a true point cloud of the nails to the calibration coordinate system, which is obtained by combining the calibration coordinate system with the true point cloud.

5. The method for nail recognition and positioning according to claim 1, **characterized in that** the step S4 further comprises:

S41: traversing, according to a point cloud of each nail, the nails, and obtaining basic data of the nails by combining point cloud data;
S42: performing, after traversing the nails according to the point cloud data, data sorting for the point cloud of the nails to obtain the highest point, the left/right tilt angles and the front/back tilt angles of the nail point cloud.

6. The method for nail recognition and positioning according to claim 1, **characterized in that** the step S5 further comprises:

S51: projecting point cloud coordinates of the nails to the two-dimensional plane according to external parameters of the camera, performing Gaussian filtering to eliminate potential noise points, and obtaining the deflection angle of each nail according to the two-dimensional image;
S52: pre-extracting a nail mask image of each nail individually, extracting an image contour of each nail mask through an image processing function library, and performing minimum rectangle fitting to return a rotation angle taking an upper left vertex of a minimum rectangle as an origin after the fitting is completed;
S53: obtaining, through an image processing function, the minimum rectangle of a contour of a nail, obtaining left/right and up/down end points of the nail according to an intersection of the rectangle and the contour of the nail, calculating a left/right tilt angle of the nail according to point cloud coordinates (x, y, z) of the left/right end points, and calculating an up/down tilt angle according to point cloud coordinates of the up/down end points.

7. The method for nail recognition and positioning according to claim 1, **characterized in that** the segmentation network comprises but is not limited to Unet, pspnet, deeplab series, etc. for performing segmentation and comparison on the second image information.

8. The method for nail recognition and positioning according to claim 1, **characterized in that** the recognition device is one of a 3D camera, an RGB binocular camera, a 2D/3D laser radar, a 3D structured light camera, or a tof camera.

9. A system for nail recognition and positioning, **characterized in that** the system is applicable for the method according to any one of claim 1 to claim 8, and comprises:

an image processing module (1), configured to receive the first image information sent by the recognition device and generate the second image information according to nail sections corresponding to the first image information;
a communication module (2), configured to send the second image information to the segmentation network through the communication module to perform segmentation on an image of nail sections therein, and return divided nail mask images to the image processing module;
a control module (3), configured to preset a probability value, to compare the divided second image information with the first image information, to determine a probability value that a corresponding pixel belongs to a nail section, to mark pixel points with a probability value greater than the preset probability value as the nail section, and to mark pixel points with a probability value less than the preset probability value as the non-nail section, so as to obtain the nail mask images of the first image information;
a 3D point cloud calculation module (4), configured to combine the nail mask images with the original 3D point cloud to obtain true point cloud coordinates of the nails, and convert the nail point cloud to the calibration coordinate system, so that the printing device performs printing according to a location of the calibration coordinate system;

an information processing module (5), configured to collect and process calculated or converted 3D point cloud coordinates and to obtain a deflection angle according to the 3D point cloud coordinates.

10. The system for nail recognition and positioning according to claim 9, **characterized in that** the calibration coordinate system represents an x-y plane, parallel to a plane of the printing device.

EP 4 645 268 A1

S1: acquiring, by a recognition device, first image information of an operating area through photographing, positioning locations of nails in the first image information through a target-detecting network to generate corresponding second image information, transmitting the second image information to a segmentation network to divide the second image information into a plurality of regions, and comparing the first image information with the divided second image information after pre-setting a probability value, to obtain nail mask images of the first image information → s1

S2: obtaining true coordinates of a nail point cloud through calculation of an original 3D point cloud and the nail mask images, and performing statistical filtering on the nail point cloud to eliminate noise points of the point cloud → s2

S3: converting the nail point cloud to a calibration coordinate system, which is determined by locating a printing device below the recognition device → s3

S4: traversing each nail to obtain information comprising a highest point, left/right tilt angles, and front/back tilt angles of the nails according to point cloud information of the nails → s4

S5: projecting point cloud coordinates of the nails to a two-dimensional plane according to external parameters of a camera, performing Gaussian filtering to eliminate potential noise points, and obtaining a deflection angle of each nail according to a two-dimensional image → s5

FIG. 1

S11: acquiring, by the recognition device, the first image information through photographing positions of fingers in the operating area, and sending the first image information to the target-detecting network to position nail sections in the first image information so as to generate the corresponding second image information mainly comprising image information of the nail sections → s11

S12: sending the second image information to the segmentation network, pre-setting a probability value of judgment, obtaining a probability value that each pixel in an original hand image belongs to a nail section, marking pixel points with a probability value greater than the preset probability value as the nail section, marking pixel points with a probability value less than the preset probability value as a non-nail section, so as to obtain the nail mask images of the first image information → s12

FIG. 2

11

S21: calculating the nail mask images and original 3D point cloud data to obtain true point cloud coordinates of the nails, wherein the original 3D point cloud data are data set in a real world $\rightarrow$ s21

S22: performing filtering on each nail mask image to eliminate noise points of the point cloud, such that an accuracy of image information is fed back through the point cloud $\rightarrow$ s22

## FIG. 3

S31: setting, based on the recognition device, an initial position of the printing device below the recognition device as the calibration coordinate system $\rightarrow$ s31

S32: sending a true point cloud of the nails to the calibration coordinate system, which is obtained by combining the calibration coordinate system with the true point cloud $\rightarrow$ s32

## FIG. 4

S41: traversing, according to a point cloud of each nail, the nails, and obtaining basic data of the nails by combining point cloud data $\rightarrow$ s41

S42: performing, after traversing the nails according to the point cloud data, data sorting for the point cloud of the nails to obtain the highest point, the left/right tilt angle, and the front/back tilt angle of the nail point cloud $\rightarrow$ s42

## FIG. 5

S51: projecting point cloud coordinates of the nails to the two-dimensional plane according to external parameters of the camera, performing Gaussian filtering to eliminate potential noise points, and obtaining the deflection angle of each nail according to the two-dimensional image    ► S51

S52: pre-extracting a nail mask image of each nail individually, extracting an image contour of each nail mask through an image processing function library, and performing minimum rectangle fitting to return a rotation angle taking an upper left vertex of a minimum rectangle as an origin after the fitting is completed    ► S52

S53: obtaining, through an image processing function, the minimum rectangle of a contour of the nail, obtaining left-right and up-down end points of the nail according to an intersection of the rectangle and the contour of the nail, calculating a left-right tilt angle of the nail according to point cloud coordinates (x, y, z) of the left-right end points, and calculating an up-down tilt angle according to point cloud coordinates of the up-down end points    ► S53

# FIG. 6

FIG. 7

## INTERNATIONAL SEARCH REPORT

| International application No. |
| --- |
| **PCT/CN2023/138260** |

| A. | CLASSIFICATION OF SUBJECT MATTER |
| --- | --- |

G06V40/10(2022.01)i

According to International Patent Classification (IPC) or to both national classification and IPC

| B. | FIELDS SEARCHED |
| --- | --- |

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNABS, CNTXT, WOTXT, VEN, EPTXT, USTXT, IEEE, CNKI, GOOGLE: 指甲识别, 美甲打印, 点云, 投影, 二维图像, 角度, 坐标系, nail recognition, nail print+, point cloud, 3D, project+, 2D image, angle, coordinate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116168417 A (SHANGHAI MEINAIER TECHNOLOGY CO., LTD.) 26 May 2023 (2023-05-26) claims 1-10 | 1-10 |
| Y | CN 113469093 A (SHANGHAI MEINAIER TECHNOLOGY CO., LTD.) 01 October 2021 (2021-10-01) description, paragraphs 6-35 and 58-62 | 1-10 |
| Y | CN 112990037 A (SHANGHAI HUIZI COSMETICS CO., LTD.) 18 June 2021 (2021-06-18) description, paragraphs 140-149 and 181-197 | 1-10 |
| Y | WO 2021023184 A1 (CAO NAICHENG) 11 February 2021 (2021-02-11) description, paragraph 13 | 1-10 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 February 2024** | **23 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/138260** |

| Patent document cited in search report | | | Publication date (day/month/year) | Patent family member(s) | | | Publication date (day/month/year) |
|---|---|---|---|---|---|---|---|
| CN | 116168417 | A | 26 May 2023 | None | | | |
| CN | 113469093 | A | 01 October 2021 | None | | | |
| CN | 112990037 | A | 18 June 2021 | None | | | |
| WO | 2021023184 | A1 | 11 February 2021 | CN | 110477575 | A | 22 November 2019 |
| | | | | CN | 211910804 | U | 13 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113469093 A